# EUROPÄISCHE PATENTSCHRIFT

(11) **EP 2 132 451 B1**
(45) Veröffentlichungstag und Bekanntmachung des Hinweises auf die Patenterteilung: **15.02.2012**
(21) Anmeldenummer: 08735535.0
(22) Anmeldetag: 27.03.2008
(51) Int. Cl.: F16C 11/06, C09J 127/12

(54) **GELENKLAGER**
SPHERICAL PLAIN BEARING
PALIER D'ARTICULATION

(30) Priorität: 04.04.2007 DE 102007016713
(43) Veröffentlichungstag der Anmeldung: 16.12.2009
(73) Patentinhaber: Saint-Gobain Performance Plastics Pampus GmbH, 47877 Willich (DE)
(72) Erfinder: ANGENHEISTER, Markus, 47906 Kempen (DE)
(74) Vertreter: Lotze, Rüdiger
(86) Internationale Anmeldenummer: PCT/EP2008/053677
(87) Internationale Veröffentlichungsnummer: WO 2008/122522

(56) Entgegenhaltungen:
- US-A- 3 017 209
- US-A- 3 239 257
- US-A- 4 231 673
- US-A- 4 767 108

## Beschreibung

Die Erfindung betrifft ein Gelenklager, insbesondere für ein Kugelgelenk, mit einer Gleitlagerschale, wobei die Gleitlagerschale eine ein Gleitmaterial enthaltende Gleitschicht und wenigstens eine formstabile Trägerschicht umfasst.

Gelenklager der eingangs genannten Art sind aus dem Stand der Technik seit langem bekannt. Insbesondere finden sie Einsatz in Kugelgelenken, welche in den unterschiedlichsten Bereichen des Maschinenbaus und insbesondere in der Kraftfahrzeugtechnik als Gelenkkomponenten von Fahrwerks- und Lenkungsbaugruppen eingesetzt werden. Die Gleitlagerschale ist dabei in einem Lagergehäuse eingebaut und umgibt eine an einen Gelenkzapfen angeformte Gelenkkugel. Durch diese Geometrie kann der Gelenkzapfen rotatorische Bewegungen prinzipiell in alle Raumrichtungen vollführen.

Bei einem Kraftfahrzeugfahrwerk üblicher Bauart sind beispielsweise die Traggelenke als fettgeschmierte Kugelgelenke ausgeführt. Durch Alterung des Schmierstoffes und der Lagerpartner kommt es regelmäßig nach längerem Stillstand zu Anbackerscheinungen, so dass es bei erneuter Benutzung des Kraftfahrzeugs zu einem "Losbrechen" der Gelenkkugel von der Lagerschale kommt, was von vernehmlichen Knackgeräuschen begleitet wird und ein deutliches Zeichen für einen fortgeschrittenen Lagerverschleiß ist.

Ein selbstschmierendes Gelenklager eines Kugelgelenks der eingangs genannten Art ist in der GB 875,003 beschrieben. Die Gleitlagerschale dieses Gelenklagers ist aus zwei halbkugelförmigen Schalenelementen aus einem metallischen Werkstoff gebildet. Auf ihrer der Gelenkkugel zugewandten Innenseite sind sie mit einem selbstschmierenden Gleitmaterial, beispielsweise einer PTFE-Blei-Mischung, beschichtet. An ihren einander gegenüberliegenden äußeren Rändern weisen die halbkugelförmigen Schalenelemente umgebogene Flansche auf, welche von einem äußeren Klemmring über dessen radial nach innen weisende Flansche umklammert sind. Zwischen den Flanschen des Klemmrings einerseits und den äußeren Flanschen der Schalenelemente andererseits sind Gummiringe angeordnet, so dass im Ergebnis die Schalenelemente gummigefedert an der umgriffenen Gelenkkugel anliegen.

Das vorstehend beschriebene Gelenklager zeichnet sich durch einen vergleichsweise einfachen Aufbau aus. Trotz des Einsatzes von Elastomeren wird mit diesem Gleitgelenklager jedoch noch keine zufriedenstellende Schwingungsdämpfung erreicht.

Gelenklager des Standes der Technik sind aus den Dokumenten US 3 017 209 A, US 3 239 257 A, US 4 767 108 A, US 4 231 673 A und GB 875 003 A bekannt.

Ausgehend von diesem Stand der Technik liegt der Erfindung daher die Aufgabe zugrunde, ein selbstschmierendes Gelenklager der eingangs genannten Art anzugeben, welches sich durch einen sehr einfachen Aufbau und im Vergleich zum bekannten Stand der Technik verbesserte Schwingungsdämpfungseigenschaften auszeichnet.

Die Aufgabe wird erfindungsgemäß bei einem Gelenklager gemäß dem Patentanspruch 1 gelöst. Das Gelenklager für ein Kugelgelenk umfasst zwei sphärisch geformten Gleitlagerschalen, wobei die Gleitlagerschalen eine ein Gleitmaterial enthaltende Gleitschicht und wenigstens eine formstabile Trägerschicht umfassen, wobei die Gleitlagerschalen ferner wenigstens eine elastische Schicht umfassen, wobei die Trägerschicht zwischen der Gleitschicht und der elastischen Schicht angeordnet ist und auf der von der Trägerschicht abgewandten Seite der elastischen Schicht eine weitere Trägerschicht vorgesehen ist, wobei die Gleitlagerschalen in ein Lagergehäuse einpressbar sind.

Die Gleitlagerschale des erfindungsgemäßen Gelenklagers besteht aus einem einfach aufgebauten Schichtsystem mit einer Gleitschicht, wenigstens einer formstabilen Trägerschicht sowie erfindungsgemäß wenigstens einer elastischen Schicht. Dadurch, dass die mit dem entsprechenden Gelenklagerpartner in Kontakt stehende Gleitschicht vollflächig mit der erfindungsgemäß vorgesehenen elastischen Schicht unterlegt ist, wird eine optimale Schwingungsdämpfung unabhängig von der Art und Stärke der Relativbewegung zwischen beiden Lagerpartnern erreicht. Ferner bewirkt die unterhalb der Gleitschicht angeordnete elastische Schicht eine wirksame Körperschallentkopplung, so dass die Schallübertragung von dem einen Gelenklagerpartner auf den anderen minimiert ist. Im Falle des Einsatzes des erfindungsgemäßen Gelenklagers im Fahrwerk eines Kraftfahrzeuges bedeutet dies somit eine wirkungsvolle Schwingungsdämpfung und Entkopplung der Fahrzeugrahmenstruktur und damit des Fahrzeuginnenraums von Abrollgeräuschen, was den Fahrkomfort spürbar erhöht. Materialstärke und Werkstoff der im Betrieb des Gelenklagers formstabilen Trägerschicht sind schließlich derart gewählt, dass die Gleitlagerschale eine hohe Formbarkeit besitzt und so das Gelenklager an eine Vielzahl von Anwendungen angepasst werden kann.

Nach einer ersten Ausgestaltung der Erfindung ist die elastische Schicht in der Gleitlagerschale im Wesentlichen senkrecht zur Schichterstreckung vorgespannt. Durch diese Vorspannung der elastischen Schicht wird erreicht, dass ein sukzessiver Materialabtrag in der Gleitschicht über die Lebensdauer des Gelenklagers durch eine entsprechende Ausdehnung der vorgespannten elastischen Schicht kompensiert werden kann, so dass während der gesamten Lebensdauer des Gelenklagers eine spaltfreie Führung des Lagerpartners in der Gleitlagerschale sichergestellt ist. Ein Ausschlagen des Lagers wird somit durch ein automatisches Nachstellen durch die sich entsprechend dem Materialabtrag entspannende elastische Schicht wirksam minimiert.

Der Schichtaufbau der Gleitlagerschale kann unterschiedlich gestaltet sein, wobei es sich versteht, dass die mit dem Lagerpartner unmittelbar in Kontakt stehende äußere Schicht stets durch die Gleitschicht gebildet wird. So ist es nach der Erfindung möglich, die Trägerschicht zwischen der Gleitschicht und der elastischen Schicht anzuordnen. Dabei ist erfindungsgemäß vorgesehen, dass auf der von der Trägerschicht abgewandten Seite der elastischen Schicht eine weitere Trägerschicht angeordnet ist. So kann die Gleitlagerschale einfach in ein Lagergehäuse eingepresst werden, ohne dass es zu einer Schichtabschälung kommen könnte. Trägerschicht und Gleitschicht sind vorzugsweise mittels einer Klebeschicht miteinander verbunden. Hierbei werden als Klebematerial bevorzugt mindestens ein Fluorpolymer, insbesondere Perfluor-Alkoxy-Polymer (PFA), Perfluormethylvinylether (MFA), Ethylen-Tetrafluorethylen (ETFE), Polychlortrifluorethylen (PCTFE), Polyvinylidenfluorid (PVDF), Perfluorethylen-Copolymer (FEP), Terpolymer aus Tetrafluorethylen, Hexafluorpropylen, Vinylidenfluorid (THV), ausgehärtete Klebstoffe, insbesondere Epoxidkleber, Polyimidkleber und/oder Heißkleber niedriger Temperatur, insbesondere Ethylen-Vinyl-Acetat und Polyether/Polyamidcopolymer, oder geeignete Thermoplaste und/oder Mischungen daraus verwendet.

Desgleichen ist die elastische Schicht vorzugsweise über eine Haftvermittlerschicht mit der Trägerschicht verbunden. Als Haftvermittler kommen insbesondere mindestens ein reaktives Polymer, insbesondere auf Silan-Basis, und/oder Pigmente in einem Lösungsmittel, insbesondere in Methylisobutylketon (MIBK), in Xylol, in Ethanol und Wasser oder in Ethanol und Methylethylketonen (MEK) zum Einsatz.

Die erfindungsgemäß vorgesehene elastische Schicht kann aus unterschiedlichen Materialien, die eine geeignete Elastizität besitzen, gebildet sein. Bevorzugt enthält sie ein Elastomer, insbesondere Nitrilkautschuk, Neoprenkautschuk, Silikonkautschuk, ein olefinisches Elastomer, ein Styrol-Elastomer, ein thermoplastisches Elastomer, ein vernetztes Elastomer, ein Polyether-/Polyester-Elastomer, ein Ethylen-Propylen-Elastomer, Ethylen-Acrylat-Kautschuke und/oder ein Fluorelastomer. Auch offenporige Materialien, wie z.B. Schäume, sind geeignet, wenn sie eine geeignete Elastizität aufweisen. Je nach gewünschter Resistenz gegen Schmierstoffe, Lösungsmittel und/oder Temperatur kann auch ein anderes Elastomer, ggf. unter Zugabe von geeigneten Füllstoffen, zum Einsatz kommen.

Das in der Gleitschicht enthaltene Gleitmaterial seinerseits kann unterschiedliche Materialien enthalten. Bevorzugt enthält das Gleitmaterial einen Kunststoff, vorzugsweise einen Hochtemperaturkunststoff, insbesondere ausgewählt aus der Gruppe, bestehend aus Fluorpolymeren, insbesondere Polytetrafluorethylen (PTFE), fluoriertes Ethylen-Propylen (FEP), Polyvinylidenfluorid (PVDF), Polychlorotrifluorethylen (PCTFE), Ethylenchlorotrifluorethylen (ECTFE) und Perfluoralkoxypolymer (PFA), Polyacetal, Polybutylenterephtalat (PBT), Polyimide, Polyetherimid, Polyetheretherketon (PEEK), Polyethylen, Polysulfon, insbesondere Polyethersulfon, Polyamid, Polyphenylensulfid, Polyurethan, Polyester, Polyphenylenoxid sowie Gemische. daraus. Besonders bevorzugt wird aufgrund der exzellenten Gleiteigenschaften Polytetrafluorethylen (PTFE) eingesetzt.

Die Gleitschicht enthält bevorzugt Schmiermittel und/oder Füllstoffe, insbesondere Glas- und/oder Kohlenstofffaser, Silikon, Graphit, Polyetheretherketon, Molybdändisulfid, aromatisches Polyester, Kohlenstoffteilchen, Bronze, Fluorpolymer, thermoplastische Füllstoffe, z.B. Polyimid (PI), Polyamidimid (PAI), Polyphenylensulfid (PPS), Polyphenylensulfon (PPSO₂) oder Flüssigkristallpolymere (LCP), mineralische Füllstoffe, z.B. Wollastonit oder Bariumsulfat (BaSO₄), oder Kombinationen daraus.

Die Dicke der einzelnen Schichten kann unterschiedlich gewählt sein. Besonders günstige Dämpfungs- und Körperschallentkopplungseigenschaften werden bei dem erfindungsgemäßen Gelenklager dann erreicht, wenn die Dicke der elastischen Schicht ca. ein zehnfaches der Dicke der Gleitschicht beträgt. Speziell kann die Dicke der elastischen Schicht ca. 0,1 - 1,0 mm, vorzugsweise 0,3 - 0,6 mm betragen. Die Dicke der Gleitschicht beträgt entsprechend bevorzugt 0,05 - 1,0 mm, vorzugsweise 0,1 - 0,2 mm. Die formstabile Trägerschicht weist bevorzugt eine Dicke von 0,2 mm bis 1,0 mm, vorzugsweise 0,2 mm bis 0,5 mm auf.

Das Material der Trägerschicht ist bevorzugt ein metallischer Werkstoff, insbesondere Stahl, Edelstahl, Kupfer, Titan, Bronze, Aluminium, eine Legierung daraus, eine Lagerfolie aus einem Metallgewebe und PTFE (Norglide® MP) oder ein Verbund aus einer PTFE-Folie und einem Bronze-Streckmetall (Norglide® SM).

Der Erfindung liegt ferner die Aufgabe zugrunde ein Kugelgelenk anzugeben, welches einfach aufgebaut ist und eine wirksame Schwingungsdämpfung und Körperschallentkopplung sicherstellt.

Die Aufgabe wird erfindungsgemäß mit einem Kugelgelenk umfassend einen kugelförmigen Gelenkkopf und ein sphärisches Gelenklager gelöst, wobei das Gelenklager nach einem der Ansprüche 1 bis 13 ausgebildet ist.

Die Zeichnungenen zeigen:
- Fig. 1: ein Kugelgelenk mit Lagergehäuse, Gelenklager und Gelenkkugel und
- Fig. 2: das Schichtsystem der Gleitlagerschale des Gelenklagers gemäß Einzelheit II aus Fig. 1.

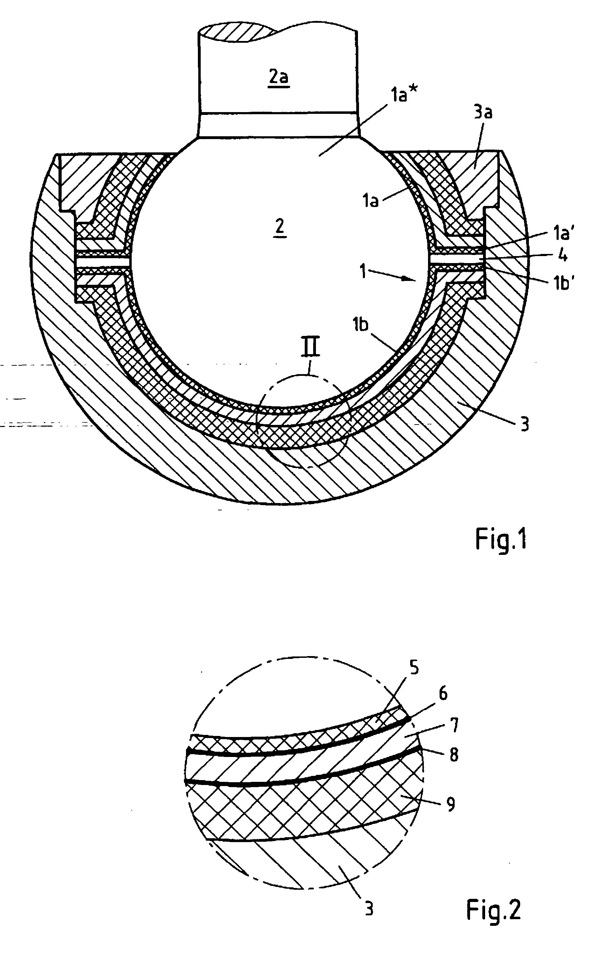

Das nicht erfindungsgemäße zur Veranschaulidung das gestellte Kugelgelenk gemäß Fig. 1 umfasst ein selbstschmierendes Gelenklager 1 sowie eine in dem Gelenklager 1 spielfrei gelagerte Gelenkkugel 2 mit angeformtem Lagerzapfen 2a. Das Gelenklager 1 ist in ein Lagergehäuse 3 eingebaut und in dieser Position über ein Ringelement 3a, welches Bestandteil des Lagergehäuses 3 ist, gesichert.

Das Gelenklager 1 umfasst zwei sphärisch geformte Gleitlagerschalen 1a, 1b, wobei die obere Gleitlagerschale 1a eine zentrale Öffnung 1a* umfasst, durch welche der an die Gelenkkugel 2 angeformte Lagerzapfen 2a aus dem Kugelgelenk herausragt. Dabei ist die Öffnung 1a* derart bemessen, dass der Lagerzapfen 2a die gewünschten Bewegungen relativ zum Gelenklager 1 ausführen kann. Beide Gleitlagerschalen 1a, 1b weisen jeweils an ihren einander zugewandten ringförmigen Rändern ein ringförmigen, radial nach außen weisenden Flansch. 1a', 1b' auf. Zwischen den beiden Flanschen 1a', 1b' ist ein ringförmiger Zwischenraum 4 gebildet, der der Feineinstellung der relativen Positionierung der Lagerschalen 1a, 1b zur in den Lagerschalen gelagerten Gelenkkugel 2 dient. Hierdurch ist eine spielfreie Lagerung der Gelenkkugel 2 in den Lagerschalen 1a, 1b sichergestellt. Ferner können durch eine entsprechende Einstellung des Zwischenraums 4 bei der Gelenkkugel 2 Fertigungstoleranzen ausgeglichen werden.

In Fig. 2 ist der Schichtaufbau der Gleitlagerschale 1b - die Gleitlagerschale 1a ist identisch ausgebildet - des Gelenklagers 1 des Kugelgelenks gemäß Fig. 1 im Detail dargestellt. Unmittelbar der Gelenkkugel 2 zugewandt ist eine Gleitschicht 5. Diese enthält als Gleitmaterial bevorzugt Polytetrafluorethylen (PTFE). Prinzipiell können hier eine Vielzahl von Gleitmaterialien eingesetzt werden, wie sie beispielsweise von der Anmelderin unter der Marke Norglide® vertrieben werden.

Über eine Klebeschicht 6 ist die Gleitschicht 5 mit einer darunterliegenden formstabilen Trägerschicht 7 verbunden. Diese besteht bevorzugt aus Stahl mit einer Dicke von 0,2 mm bis 0,5 mm. Über eine Haftvermittlerschicht 8 ist die formstabile Trägerschicht 7 ihrerseits mit einer erfindungsgemäß vorgesehenen elastischen Schicht 9 verbunden. Bevorzugt enthält die elastische Schicht ein Elastomer, insbesondere Nitrilkautschuk. Durch die elastische Schicht 9 wird bei dem erfindungsgemäßen Kugelgelenk eine exzellente Schwingungsdämpfung erreicht. Ebenso bewirkt die elastische Schicht 9, durch die die Gleitschicht 5 der Gleitlagerschale 1a, 1b vollflächig unterlegt ist, eine wirksame Körperschallentkopplung zwischen Lagergehäuse 3 und Gelenkkugel 2.

Bei dem vorliegenden Kugelgelenk ist die elastische Schicht 9 in den Gleitlagerschalen 1a, 1b senkrecht zur Schichtausdehnung, d.h. in radialer Richtung des Kugelgelenks, vorgespannt. Dies bewirkt, dass ein sukzessiver Materialabtrag beispielsweise in der Gleitschicht 5 über die Lebensdauer des Gelenklagers 1 durch eine entsprechende Ausdehnung der vorgespannten elastischen Schicht 9 kompensiert wird.

Hierdurch wird während der gesamten Lebensdauer des Kugelgelenks eine spielfreie Führung des der Gelenkkugel 2 in dem Gelenklager 1 sichergestellt.

Um optimale Dämpfungseigenschaften zu erhalten, beträgt die Dicke der elastischen Schicht 9 bei dem vorliegenden Kugelgelenk bevorzugt das Zehnfache der Schichtdicke der Gleitschicht. Vorliegend weist die Gleitschicht eine Dicke von ca. 0,1 mm und die elastische Schicht auf eine Dicke von ca. 0,4 mm.

## Patentansprüche

1. Gelenklager (1) für ein Kugelgelenk
mit zwei sphärisch geformten Gleitlagerschalen (1a, 1b), wobei die Gleitlagerschalen (1a, 1b) eine ein Gleitmaterial enthaltende Gleitschicht (5) und wenigstens eine formstabile Trägerschicht (7) umfassen, dadurch geckennzeichnet, daß die Gleitlagerschalen (1a, 1b) ferner wenigstens eine elastische Schicht (9) umfassen, wobei die Trägerschicht (7) zwischen der Gleitschicht (5) und der elastischen Schicht (9) angeordnet ist und auf der von der Trägerschicht (7) abgewandten Seite der elastischen Schicht (9) eine weitere Trägerschicht vorgesehen ist, wobei die Gleitlagerschalen (1a, 1b) in ein Lagergehäuse einpressbar sind.

2. Gelenklager (1) nach Anspruch 1,
**dadurch gekennzeichnet, dass** die elastische Schicht (9) in der Gleitlagerschale (1a, 1b) im Wesentlichen senkrecht zur Schichtausdehnung vorgespannt ist.

3. Gelenklager (1) nach Anspruch 1 oder 2,
**dadurch gekennzeichnet, dass** die Gleitschicht (5) mittels einer Klebeschicht (6) mit der Trägerschicht (7) verbunden ist.

4. Gelenklager (1) nach Anspruch 3,
**dadurch gekennzeichnet, dass** die Klebeschicht als Klebstoff mindestens ein Fluorpolymer, insbesondere Perfluor-Alkoxy-Polymer, Perfluormethylvinylether, Ethylen-Tetrafluorethylen, Polychlortrifluorethylen, Polyvinylidenfluorid, Perfluorethylen-Copolymer, Terpolymer aus Tetrafluorethylen, Hexafluorpropylen, Vinylidenfluorid, ausgehärtete Klebstoffe, insbesondere Epoxidkleber, Polyimidkleber und/oder Heißkleber niedriger Temperatur, insbesondere Ethylen-Vinyl-Acetat und Polyether/Polyamidcopolymer, oder geeignete Thermoplaste und/oder Mischung daraus enthält.

5. Gelenklager (1) nach einem der Ansprüche 1 bis 4,
**dadurch gekennzeichnet, dass** die elastische Schicht (9) über eine Haftvermittlerschicht (8) mit der Trägerschicht (7) verbunden ist.

6. Gelenklager (1) nach Anspruch 5,
**dadurch gekennzeichnet, dass** die Haftvermittlerschicht mindestens ein reaktives Polymer, insbesondere auf Silan-Basis, und/oder Pigmente in einem Lösungsmittel, insbesondere in Methylisobutylketon, in Xylol, in Ethanol und Wasser oder in Ethanol und Methylethylketonen enthält.

7. Gelenklager (1) nach einem der Ansprüche 1 bis 6,
**dadurch gekennzeichnet, dass** die elastische Schicht (9) ein Elastomer, insbesondere Nitrilkautschuk, Neoprenkautschuk, Silikonkautschuk, ein olefinisches Elastomer, ein Styrol-Elastomer, ein thermoplastisches Elastomer, ein vernetztes Elastomer, ein Polyether-/Polyester-Elastomer, ein Ethylen-Propylen-Elastomer, Ethylen-Acrylat-Kautschuke und/oder ein Fluorelastomer enthält.

8. Gelenklager (1) nach einem der Ansprüche 1 bis 7,
**dadurch gekennzeichnet, dass** das Gleitmaterial einen Kunststoff, vorzugsweise einen Hochtemperatur-Kunststoff, insbesondere ausgewählt aus der Gruppe bestehend aus Fluorpolymeren, insbesondere Polytetrafluorethylen, fluoriertes Ethylen-Propylen, Polyvinylidenfluorid, Polychlorotrifluorethylen, Ethylenchlorotrifluorethylen und Perfluoralkoxpolymer, Polyacetal, Polybutylenterephtalat, Polyimide, Polyetherimid, Polyetheretherketon, Polyethylen, Polysulfon, insbesondere Polyethersylfon, Polyamid, Polyphenylensulfid, Polyurethan, Polyester, Polyphenylenoxid sowie Gemische daraus.

9. Gelenklager (1) nach einem der Ansprüche 1 bis 8,
**dadurch gekennzeichnet, dass** die Gleitschicht Schmiermittel und/oder Füllstoffe enthält, insbesondere Glas- und/oder Kohlenstofffaser, Silikon, Graphit, Polyetheretherketon, Molybdändisulfid, aromatisches Polyester, Kohlenstoffteilchen, Bronze, Fluorpolymer, thermoplastische Füllstoffe, z.B. Polyimid, Polyamidimid, Polyphenylensulfid, Polyphenylensulfon oder Flüssigkristallpolymere, mineralische Füllstoffe, z.B. Wollastonit oder Bariumsulfat, oder Kombinationen daraus.

10. Gelenklager (1) nach einem der Ansprüche 1 bis 9,
**dadurch gekennzeichnet, dass** die elastische Schicht (9) eine Dicke von ca. 0,1 bis 1,0 mm, vorzugsweise 0,3 bis 0,6 mm aufweist.

11. Gelenklager (1) nach einem der Ansprüche 1 bis 10,
**dadurch gekennzeichnet, dass** die Gleitschicht (5) eine Dicke von 0,05 bis 1,0 mm, vorzugsweise 0,1 bis 0,2mm aufweist.

12. Gelenklager (1) nach einem der Ansprüche 1 bis 11,
**dadurch gekennzeichnet, dass** die formstabile Trägerschicht (7) eine Dicke von 0,2 mm bis 1,0 mm, vorzugsweise 0,2 mm bis 0,5 mm, aufweist.

13. Gelenklager (1) nach einem der Ansprüche 1 bis 12,
**dadurch gekennzeichnet, dass** die Trägerschicht (7) aus Metall, insbesondere Stahl, Edelstahl, Kupfer, Titan, Bronze, Aluminium, einer Legierung daraus, aus einer Lagerfolie aus einem Metallgewebe und PTFE oder einem Verbund aus einer PTFE-Folie und einem Bronze-Streckmetall besteht.

14. Kugelgelenk umfassend einen kugelförmigen Gelenkkopf (2) und ein sphärisches Gelenklager (1), wobei das Gelenklager (1) nach einem der Ansprüche 1 bis 13 ausgebildet ist.

15. Verwendung eines Gelenklagers (1) nach einem der Ansprüche 1 bis 13 in einem Kugelgelenk, vorzugsweise in einem Kraftfahrzeug, insbesondere im Fahrwerk eines Kraftfahrzeugs.

## Claims

1. Spherical plain bearing (1) for a ball-and-socket joint having two spherically formed plain bearing shells (1a, 1b), wherein the plain bearing shells (1a, 1b) comprise a sliding layer (5) containing a sliding material and at least one dimensionally stable support layer (7), **characterized in that** the plain bearing shells (1a, 1b) furthermore comprise at least one elastic layer (9), wherein the support layer (7) is arranged between the sliding layer (5) and the elastic layer (9) and a further support layer is provided on that side of the elastic layer (9) which is remote from the support layer (7), wherein the plain bearing shells (1a, 1b) can be pressed into a bearing housing.

2. Spherical plain bearing (1) according to Claim 1,
**characterized in that**
the elastic layer (9) in the plain bearing shell (1a, 1b) is prestressed substantially perpendicularly to the layer extent.

3. Spherical plain bearing (1) according to Claim 1 or 2,
**characterized in that**
the sliding layer (5) is bonded to the support layer (7) by means of an adhesive layer (6).

4. Spherical plain bearing (1) according to Claim 3,
**characterized in that**
the adhesive present in the adhesive layer is at least one fluoropolymer, in particular perfluoroalkoxy polymer, perfluoro(methyl vinyl ether), ethylene-tetrafluoroethylene, polychlorotrifluoroethylene, polyvinylidene fluoride, perfluoroethylene copolymer, terpolymer of tetrafluoroethylene, hexafluoropropylene, vinylidene fluoride, cured adhesives, in particular epoxy adhesives, polyimide adhesives and/or low-temperature hotmelt adhesives, in particular ethylene-vinyl acetate and polyether-polyamide copolymers, or suitable thermoplastics and/or a mixture thereof.

5. Spherical plain bearing (1) according to one of Claims 1 to 4,
**characterized in that**
the elastic layer (9) is bonded to the support layer (7) via an adhesion promoter layer (8).

6. Spherical plain bearing (1) according to Claim 5,
**characterized in that**
the adhesion promoter layer contains at least one reactive polymer, in particular a silane-based reactive polymer, and/or pigments in a solvent, in particular in methyl isobutyl ketone, in xylene, in ethanol and water or in ethanol and methyl ethyl ketones.

7. Spherical plain bearing (1) according to one of Claims 1 to 6,
**characterized in that**
the elastic layer (9) contains an elastomer, in particular nitrile rubber, neoprene rubber, silicone rubber, an olefinic elastomer, a styrene elastomer, a thermoplastic elastomer, a crosslinked elastomer, a polyether-polyester elastomer, an ethylene-propylene elastomer, ethylene-acrylate rubbers and/or a fluoroelastomer.

8. Spherical plain bearing (1) according to one of Claims 1 to 7,
**characterized in that**
the sliding material comprises a plastic, preferably a high-temperature plastic, in particular selected from the group consisting of fluoropolymers, in particular polytetrafluoroethylene, fluorinated ethylene-propylene, polyvinylidene fluoride, polychlorotrifluoroethylene, ethylene-chlorotrifluoroethylene and perfluoroalkoxy polymer, polyacetal, polybutylene terephthalate, polyimides, polyetherimide, polyether ether ketone, polyethylene, polysulfone, in particular polyethersulfone, polyamide, polyphenylene sulfide, polyurethane, polyester, polyphenylene oxide and mixtures thereof.

9. Spherical plain bearing (1) according to one of Claims 1 to 8,
**characterized in that**
the sliding layer contains lubricants and/or fillers, in particular glass and/or carbon fibers, silicone, graphite, polyether ether ketone, molybdenum disulfide, aromatic polyester, carbon particles, bronze, fluoropolymer, thermoplastic fillers, e.g. polyimide, polyamideimide, polyphenylene sulfide, polyphenylene sulfone or liquid crystal polymers, mineral fillers, e.g. wollastonite or barium sulfate, or combinations thereof.

10. Spherical plain bearing (1) according to one of Claims 1 to 9,
**characterized in that**
the thickness of the elastic layer (9) is from about 0.1 to 1.0 mm, preferably from 0.3 to 0.6 mm.

11. Spherical plain bearing (1) according to one of Claims 1 to 10,
**characterized in that**
the thickness of the sliding layer (5) is from 0.05 to 1.0 mm, preferably from 0.1 to 0.2 mm.

12. Spherical plain bearing (1) according to one of Claims 1 to 11,
**characterized in that**
the thickness of the dimensionally stable support layer (7) is from 0.2 mm to 1.0 mm, preferably from 0.2 mm to 0.5 mm.

13. Spherical plain bearing (1) according to one of Claims 1 to 12,
**characterized in that**
the support layer (7) consists of metal, in particular steel, stainless steel, copper, titanium, bronze, aluminum, an alloy thereof, of a bearing foil made from a woven metal fabric and PTFE or a composite material made from a PTFE film and a bronze expanded metal.

14. Ball-and-socket joint comprising a spherical joint head (2) and a spherical plain bearing (1), wherein the spherical plain bearing (1) is designed according to one of Claims 1 to 13.

15. Use of a spherical plain bearing (1) according to one of Claims 1 to 13 in a ball-and-socket joint, preferably in a motor vehicle, in particular in a motor vehicle chassis.

## Revendications

1. Palier d'articulation (1) pour une rotule avec deux coquilles de coussinet lisse (1a, 1b) de conformation sphérique, les coquilles de coussinet lisse (1a, 1b) comprenant une couche de glissement (5) contenant une matière glissante et au moins une couche porteuse (7) indéformable, **caractérisé en ce que** les coquilles de coussinet lisse (1a, 1b) comprennent en outre au moins une couche élastique (9), la couche porteuse (7) étant disposée entre la couche de glissement (5) et la couche élastique (9) et sur la face de la couche élastique (9) opposée à la couche porteuse (7) étant prévue une couche porteuse supplémentaire, les coquilles de coussinet lisse (1a, 1b) pouvant être enfoncées dans un logement de palier.

2. Palier d'articulation (1) selon la revendication 1, **caractérisé en ce que** la couche élastique (9) est précontrainte sensiblement à la perpendiculaire de l'extension de la couche dans la coquille de coussinet lisse (1a, 1b) .

3. Palier d'articulation (1) selon la revendication 1 ou 2, **caractérisé en ce que** la couche de glissement (5) est assemblée à la couche porteuse (7) au moyen d'une couche de colle (6).

4. Palier d'articulation (1) selon la revendication 3, **caractérisé en ce qu'**en tant qu'adhésif, la couche de colle contient au moins un fluoropolymère, notamment un polymère perfluoro-alcoxy, un perfluoro(méthylvinyléther), un éthylène tétrafluoroéthylène, un polychlorotrifluoroéthylène, un fluorure de polyvinylidène, un copolymère de perfluoroéthylène, un terpolymère du tétrafluoroéthylène, un hexafluoropropylène, un fluorure de vinylidène, des adhésifs durcis, notamment des colles époxy, des colles polyimides et/ou des thermocollants à basse température, notamment de l'éthylène acétate de vinyle et un copolymère de polyéther-polyamide, ou des matières thermoplastiques appropriées et/ou un mélange de ces derniers.

5. Palier d'articulation (1) selon l'une quelconque des revendications 1 à 4, **caractérisé en ce que** la couche élastique (9) est assemblée à la couche porteuse (7) par l'intermédiaire d'une couche de promoteur d'adhérence (8).

6. Palier d'articulation (1) selon la revendication 5, **caractérisé en ce que** la couche de promoteur d'adhérence contient au moins un polymère réactif, notamment à base de silane, et/ou des pigments dans un solvant, notamment dans de la méthylisobutylcétone, dans du xylène, dans de l'éthanol et de l'eau ou dans de l'éthanol et de la méthyléthylcétone.

7. Palier d'articulation (1) selon l'une quelconque des revendications 1 à 6, **caractérisé en ce que** la couche élastique (9) contient un élastomère, notamment du caoutchouc nitrile, du caoutchouc néoprène, du caoutchouc de silicone, un élastomère oléfinique, un élastomère de styrène, un élastomère thermoplastique, un élastomère réticulé, un élastomère polyester-polyéther, un élastomère éthylène-propylène, des caoutchoucs d'acrylate d'éthylène et/ou un fluoroélastomère.

8. Palier d'articulation (1) selon l'une quelconque des revendications 1 à 7, **caractérisé en ce que** la matière glissante contient une matière plastique, de préférence une matière plastique haute température, notamment choisie dans le groupe comprenant les fluoropolymères, notamment du polytétrafluoroéthylène, de l'éthylène-propylène fluoré, du fluorure de polyvinylidène, du polychlorotrifluoroéthylène, de l'éthylène-chlorotrifluoroéthylène et un polymère de perfluoroalcoxy, du polyacétal, du polybutylène téréphtalate, des polyimides, du polyétherimide, de la polyétheréthercétone, du polyéthylène, du polysulfone, notamment du polyéthersulfone, du polyamide, du sulfure de polyphénylène, du polyuréthane, du polyester, de l'oxyde de polyphénylène et des mélanges de ces derniers.

9. Palier d'articulation (1) selon l'une quelconque des revendications 1 à 8, **caractérisé en ce que** la couche de glissement contient des lubrifiants et/ou des agents de charge, notamment des fibres de verre et/ou des fibres de carbone, de la silicone, du graphite, de la polyétheréthercétone, du disulfure de molybdène, du polyester aromatique, des particules de carbone, du bronze, un fluoropolymère, des agents de charge thermoplastiques, par exemple du polyimide, du polyamideimide, du sulfure de polyphénylène, du polyphénylène sulfone ou des polymères à cristaux liquides, des agents de charge minéraux, par ex. de la wollastonite ou du sulfate de baryum ou des combinaisons de ces derniers.

10. Palier d'articulation (1) selon l'une quelconque des revendications 1 à 9, **caractérisé en ce que** la couche élastique (9) présente une épaisseur d'env. 0,1 à 1,0 mm, de préférence de 0,3 à 0,6 mm.

11. Palier d'articulation (1) selon l'une quelconque des revendications 1 à 10, **caractérisé en ce que** la couche de glissement (5) présente une épaisseur de 0,05 à 1,0 mm, de préférence de 0,1 à 0,2 mm.

12. Palier d'articulation (1) selon l'une quelconque des revendications 1 à 11, **caractérisé en ce que** la couche porteuse (7) indéformable présente une épaisseur de 0,2 mm à 1,0 mm, de préférence de 0,2 mm à 0,5 mm.

13. Palier d'articulation (1) selon l'une quelconque des revendications 1 à 12, **caractérisé en ce que** la couche porteuse (7) est en métal, notamment en acier, en acier inoxydable, en cuivre, en titane, en bronze, en aluminium, en un alliage de ces derniers, en une feuille de palier en un tissu métallique et en PTFE ou en un composite d'un film de PTFE et d'un métal déployé de bronze.

14. Rotule comportant une tête d'articulation en forme de boule (2) et un palier d'articulation sphérique (1), le palier d'articulation (1) étant conçu selon l'une quelconque des revendications 1 à 13.

15. Utilisation d'un palier d'articulation (1) selon l'une quelconque des revendications 1 à 13 dans une rotule, de préférence dans un véhicule automobile, notamment dans le châssis d'un véhicule automobile.
